# EUROPEAN PATENT APPLICATION

(11) **EP 4 184 982 A1**
(43) Date of publication of application: **24.05.2023**
(21) Application number: 20945027.9
(22) Date of filing: 17.07.2020
(51) Int. Cl.: H04W 16/28, H04W 72/04, H04W 28/06

(54) **TERMINAL, RADIO COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/027929
(87) International publication number: WO 2022/014056

(57) **Abstract**

A terminal according to an aspect of the present disclosure includes: a receiving section that receives a Medium Access Control (MAC) control element (MAC CE) related to a Physical Uplink Control Channel (PUCCH) resource or a PUCCH group; and a control section that determines a plurality of spatial relations for the PUCCH resource or the PUCCH group, based on the MAC CE. According to an aspect of the present disclosure, it is possible to perform preferable PUCCH repetitive transmission.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, a user terminal (User Equipment (UE)) may be configured with spatial relation information (which may be referred to as SRI) related to a Physical Uplink Control Channel (PUCCH). In Rel-15 NR, such control that one piece of PUCCH SRI is active for one PUCCH resource in a certain time period is performed.

For NR, for improvement of reliability of a PUCCH, it is studied that a UE repeatedly transmits a PUCCH to a plurality of transmission/reception points. Such PUCCH repetitive transmission may be referred to as PUCCH repetition.

However, in existing NR specifications, it is not possible to use different pieces of SRI in PUCCH repetitions, which prevents effective improvement of PUCCH reception quality. In this case, it is not possible, for example, to preferably obtain spatial diversity gain and to preferably perform high-rank transmission, for example, in a case of using a plurality of transmission/reception points, which may suppress an increase in communication throughput.

Thus, an object of the present disclosure is to provide a terminal, a radio communication method, and a base station that can perform preferable PUCCH repetitive transmission.

### Solution to Problem

A terminal according to an aspect of the present disclosure includes: a receiving section that receives a Medium Access Control (MAC) control element (MAC CE) related to a Physical Uplink Control Channel (PUCCH) resource or a PUCCH group; and a control section that determines a plurality of spatial relations for the PUCCH resource or the PUCCH group, based on the MAC CE. Advantageous Effects of Invention

According to an aspect of the present disclosure, it is possible to perform preferable PUCCH repetitive transmission.

### Brief Description of Drawings

FIGS. 1A and 1B are each a diagram to show a configuration of a PUCCH spatial relation activation/deactivation MAC CE of Rel-15/16 NR;
FIGS. 2A and 2B are each a diagram to show an example of an SRI sequence indicated by a MAC CE according to Embodiment 1.2;
FIGS. 3A and 3B are each a diagram to show another example of the SRI sequence indicated by the MAC CE according to Embodiment 1.2;
FIG. 4 is a diagram to show examples of an SRI sequence according to Embodiment 2.1;
FIGS. 5A to 5D are each a diagram to show an example of an SRI activation/deactivation MAC CE according to Embodiment 2.1;
FIGS. 6A to 6D are each a diagram to show an example of an SRI activation/deactivation MAC CE according to a variation of Embodiment 2.1;
FIGS. 7A to 7C are each a diagram to show an example of an SRI activation/deactivation MAC CE according to Embodiment 2.2;
FIGS. 8A to 8C are each a diagram to show an example of an SRI activation/deactivation MAC CE according to a variation of Embodiment 2.2;
FIGS. 9A and 9B are each a diagram to show an SRI activation/deactivation MAC CE according to a variation part 2 of Embodiment 2.2;
FIG. 10 is a diagram to show an example of an SRI activation/deactivation MAC CE according to a variation part 3 of Embodiment 2.2;
FIG. 11 is a diagram to show an example of a schematic structure of a radio communication system according to one embodiment;
FIG. 12 is a diagram to show an example of a structure of a base station according to one embodiment;
FIG. 13 is a diagram to show an example of a structure of a user terminal according to one embodiment; and
FIG. 14 is a diagram to show an example of a hardware structure of the base station and the user terminal according to one embodiment.

### Description of Embodiments

### (Spatial Relation Information)

In NR, a UE controls transmission processing (for example, at least one of transmission, mapping, precoding, modulation, and coding) for at least one of an uplink signal and channel (also expressed as signal/channel), based on a certain spatial relation.

The spatial relation to be used for a certain signal/channel may be specified by spatial relation information (SRI) notified (configured) using higher layer signaling.

Note that, in the present disclosure, the higher layer signaling may be any one or combinations of Radio Resource Control (RRC) signaling, Medium Access Control (MAC) signaling, broadcast information, and the like, for example.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

For example, in Rel-15 NR, spatial relation information between a certain reference signal (RS) and an uplink control channel (Physical Uplink Control Channel (PUCCH)) (RRC "PUCCH-SpatialRelationInfo" information element) may be included in PUCCH configuration information (RRC "PUCCH-Config" information element) and configured for the UE.

The certain RS may be at least one of a synchronization signal block (SSB), a channel state information reference signal (CSI-RS), and a reference signal for measurement (Sounding Reference Signal (SRS)).

The configured SRI may include an SRI Identifier (ID) for identifying the SRI. The SRI may include at least one of an SSB index, a CSI-RS resource ID, and an SRS resource ID as an index of the certain RS. These pieces of spatial relation information may each include a serving cell index corresponding to the certain RS, a bandwidth part (BWP) ID, and the like.

Note that, in the present disclosure, an index, an ID, an indicator, a resource ID, and the like may be interpreted interchangeably.

When the UE is configured with spatial relation information related to an SSB or a CSI-RS and a PUCCH, the PUCCH may be transmitted by using the same spatial domain filter as a spatial domain filter for reception of the SSB or the CSI-RS. In other words, in this case, the UE may assume that a UE receive beam for the SSB or the CSI-RS and a UE transmit beam for the PUCCH are the same.

When the UE is configured with spatial relation information related to an SRS and a PUCCH, the PUCCH may be transmitted by using the same spatial domain filter as a spatial domain filter for transmission of the SRS. In other words, in this case, the UE may assume that a UE transmit beam for the SRS and a UE transmit beam for the PUCCH are the same.

Note that a spatial domain filter for transmission of the base station, a downlink spatial domain transmission filter, and a transmit beam of the base station may be interpreted interchangeably. A spatial domain filter for reception of the base station, an uplink spatial domain receive filter, and a receive beam of the base station may be interpreted interchangeably.

A spatial domain filter for transmission of the UE, an uplink spatial domain transmission filter, and a transmit beam of the UE may be interpreted interchangeably. A spatial domain filter for reception of the UE, a downlink spatial domain receive filter, and a receive beam of the UE may be interpreted interchangeably.

The UE may be configured with the SRI on a PUCCH configuration (PUCCH-Config) basis. The SRI configured by the PUCCH configuration may be used for all PUCCH resources configured by the PUCCH configuration.

When more than one SRI related to the PUCCH is configured, the UE may perform such control as to make one piece of PUCCH SRI active for one PUCCH resource in a certain time period, based on a PUCCH spatial relation activation/deactivation MAC CE.

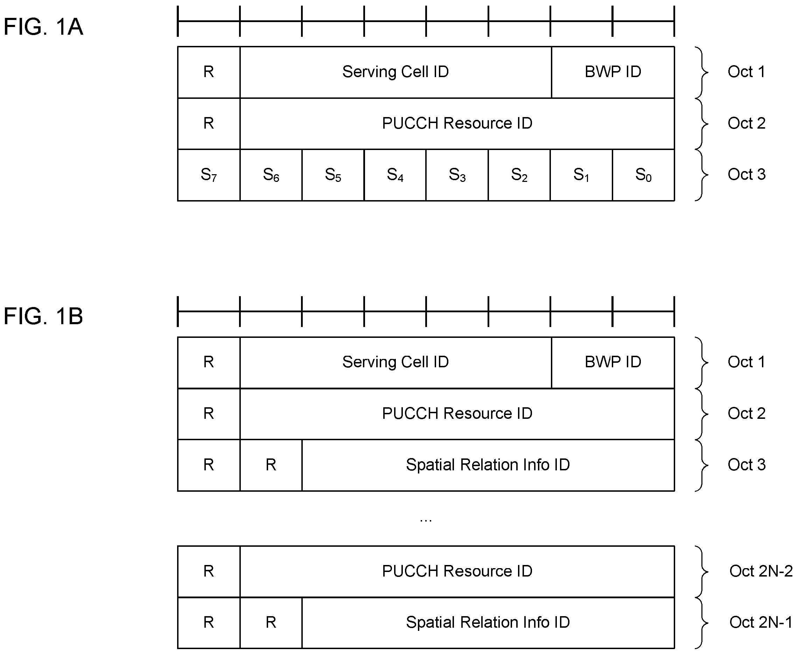

FIGS. 1A and 1B are each a diagram to show a configuration of a PUCCH spatial relation activation/deactivation MAC CE of Rel-15/16 NR. In this example, bit sequences constituting each MAC CE is shown, and the MAC CE is expressed using a plurality of octets (Octs) (1 octet = 8 bits).

FIG. 1A shows a PUCCH spatial relation activation/deactivation MAC CE defined in Rel. 15.

The MAC CE may include information such as a serving cell ID ("Serving Cell ID" field), a BWP ID ("BWP ID" field), a PUCCH resource ID ("PUCCH Resource ID" field), and the like for which the MAC CE is to be used.

The MAC CE includes "Sᵢ" (i = 0 to 7) fields. When a certain Sᵢ field indicates 1, the UE activates SRI having SRI ID #i+1. When a certain Sᵢ field indicates 0, the UE deactivates SRI having SRI ID #i+1. For a certain PUCCH resource, only one piece of PUCCH SRI can be active.

Note that each "R" field shown in FIGS. 1A and 1B may mean a reserved bit for future enhancement.

FIG. 1B shows an enhanced PUCCH spatial relation activation/deactivation MAC CE defined in Rel. 16. FIG. 1B is different from FIG. 1A in that a plurality of PUCCH resource IDs may be included and that one or a plurality of pieces of spatial relation information ("Spatial Relation Info ID" field(s)) each indicating an SRI ID may be included. The SRI ID field may be referred to simply as an SRI field.

Note that the configuration in FIG. 1B has a restriction that, when an indicated PUCCH resource ID is configured as part of a PUCCH group (also referred to as a PUCCH resource group), another PUCCH resource in the same PUCCH group is not indicated as the PUCCH resource ID in the same MAC CE. This means that this MAC CE is used for all the PUCCH resources in the PUCCH group. In other words, the same SRI is consequently used for transmission of the PUCCH resources included in the PUCCH group.

### (Multi-TRP)

For NR, it is studied that a UE performs UL transmission (for example, PUCCH transmission) for one or a plurality of transmission/reception points (TRPs) (multi-TRP).

As an example, it is studied to repeatedly transmit a PUCCH while using different pieces of SRI for multi-TRP, to improve reliability of a PUCCH for an ultra reliable and low latency (for example, Ultra Reliable and Low Latency Communications (URLLC)) use case (or service). Such PUCCH repetitive transmission may be referred to as PUCCH repetition. Repetitive transmission may be simply referred to as repetition.

Note that the SRI may correspond to a beam. For example, the UE may assume that PUCCHs having different pieces of SRI are transmitted using different beams.

With such PUCCH repetitive transmission, improvement in reception quality on a network side can be expected for the PUCCH. However, in the current Rel-15/16 NR, it is only allowed to use the same spatial relation for PUCCH repetitive transmission. As shown in FIGS. 1A and 1B above, a MAC CE to indicate (activate) one piece of SRI per PUCCH resource or PUCCH group is defined, but a plurality of pieces of SRI cannot be indicated per PUCCH resource or PUCCH group.

Hence, according to existing NR specifications, it is not possible to use different pieces of SRI in PUCCH repetition, which prevents effective improvement in PUCCH reception quality. In this case, it is not possible, for example, to preferably obtain spatial diversity gain and to preferably perform high-rank transmission in a case of using multi-TRP, which may suppress an increase in communication throughput.

Hence, the inventors of the present invention came up with the idea of a method for performing preferable PUCCH repetitive transmission. According to an aspect of the present disclosure, it is possible, for example, to indicate, for a UE, a plurality of pieces of SRI per PUCCH resource or PUCCH group, and perform PUCCH repetitive transmission using the plurality of pieces of SRI.

Embodiments according to the present disclosure will be described in detail with reference to the drawings as follows. The radio communication methods according to respective embodiments may each be employed individually, or may be employed in combination.

Note that, in the present disclosure, activate, deactivate, indicate (or specify), select, configure, update, determine, and the like may be interpreted interchangeably. In the present disclosure, a sequence, a list, a set, a group, and the like may be interpreted interchangeably.

Note that, in the present disclosure, a panel, a beam, a panel group, a beam group, an Uplink (UL) transmission entity, a TRP, spatial relation information (SRI), a spatial relation, a control resource set (CORESET), a Physical Downlink Shared Channel (PDSCH), a codeword, a base station, a certain antenna port (for example, a demodulation reference signal (DMRS) port), a certain antenna port group (for example, a DMRS port group), a certain group (for example, a code division multiplexing (CDM) group, a certain reference signal group, or a CORESET group), a certain resource (for example, a certain reference signal resource), a certain resource set (for example, a certain reference signal resource set), a CORESET pool, a PUCCH group (PUCCH resource group), a TCI state (DL TCI state), a UL TCI state, and the like may be interpreted interchangeably.

A panel Identifier (ID) and a panel may be interpreted interchangeably. In other words, a TRP ID and TRP may be interpreted interchangeably, and a CORESET group ID and a CORESET group may be interpreted interchangeably, for example. An ID and an index may be interpreted interchangeably.

In the present disclosure, a simple description "spatial relation" and a PUCCH spatial relation may be interpreted interchangeably.

PUCCH repetition in the present disclosure, MTRP based repetition, repetition of Rel. 17, repetition using different spatial relations, and the like may be interpreted interchangeably. In the following example, a PUCCH will be described as a PUCCH used for Hybrid Automatic Repeat reQuest ACKnowledgement (HARQ-ACK) transmission for a PDSCH. However, a PUCCH may be a PUCCH for transmission of UCI such as at least one of an HARQ-ACK, an SR, and CSI.

### (Radio Communication Method)

### <First Embodiment>

In a first embodiment, a new restriction is added, or an existing restriction is eased, in order to be able to indicate a plurality of pieces of SRI, for the PUCCH spatial relation activation/deactivation MAC CEs of Rel-15/16 NR described above using FIGS. 1A and 1B.

### [Embodiment 1.1]

When a PUCCH spatial relation activation/deactivation MAC CE of Rel-15 NR is used to indicate a plurality of pieces of SRI, the UE may assume at least one of the following restrictions for the MAC CE:
- For a PUCCH resource ID field, when an indicated PUCCH resource ID is configured as part of a PUCCH group, another PUCCH resource in the same PUCCH group is not indicated as the PUCCH resource ID by the same MAC CE. Note that this content may be applied when specific information is configured;
- For a PUCCH resource ID field, when an indicated PUCCH resource ID is configured as part of a PUCCH group, this MAC CE is used for all the PUCCH resources in the PUCCH group. Note that this content may be applied when specific information is configured;
- When the Sᵢ field indicates 1, SRI having SRI ID #i+1 is activated; - When a plurality of Sᵢ fields indicates 1, the Sᵢ fields are associated, in ascending order from from the one having the smallest (or largest) i value, with the order of spatial relations in an SRI sequence; and
- When no specific information is configured, only one piece of PUCCH SRI can be active for a certain PUCCH resource.

The specific information described above may be information indicating that different spatial relations for PUCCH transmission occasions are to be activated, any RRC parameter for a specific release (for example, Rel. 17), or the like.

For example, when S₀ = S₄ = S₆ = 1 is indicated by the MAC CE, the UE may assume that the first, second, and third spatial relations of the SRI sequence are SRI #1, #5, and #7, respectively.

Note that the PUCCH resource ID field may indicate a PUCCH resource for which a PUCCH group is configured or may indicate a PUCCH resource for which no PUCCH group is configured. An SRI sequence can be indicated on a PUCCH group basis in the former case while an SRI sequence can be indicated on a PUCCH resource basis in the latter case.

### [Embodiment 1.2]

When an enhanced PUCCH spatial relation activation/deactivation MAC CE of Rel-16 NR is used to indicate a plurality of pieces of SRI, the UE may assume the following restrictions for the MAC CE:
- For a PUCCH resource ID field, pieces of SRI of a plurality of PUCCH resources may be indicated for the same PUCCH group. In this case, it is assumed that the SRI sequence of the PUCCH group is constituted of the plurality of indicated pieces of SRI. Note that this content may be applied when specific information is configured.
- When a PUCCH resources of the same PUCCH group are indicated in a plurality of PUCCH resource ID fields, it may be assumed that the same PUCCH resource ID is indicated (in this case, it is possible to clearly notify the UE that another use in which, while the MAC CE is used to indicate pieces of SRI of different PUCCH groups in Rel. 16, the MAC CE is used to indicate the SRI sequence of the same PUCCH group). Note that this restriction need not necessarily be included (a plurality of PUCCH resource ID fields may indicate different PUCCH resource IDs even in a case of indicating PUCCH resources of the same PUCCH group).

The specific information described above may be information indicating that different spatial relations for PUCCH transmission occasions are to be activated, any RRC parameter for a specific release (for example, Rel. 17), or the like.

According to the above MAC CE, it is possible to indicate an SRI sequence on a PUCCH group basis. In the example in FIG. 1B, the first spatial relation of the SRI sequence of PUCCH group #x may be indicated by Octs 2 and 3, and the M-th spatial relation of the SRI sequence of PUCCH group #x may be indicated by Octs 2N - 2 and 2N - 1.

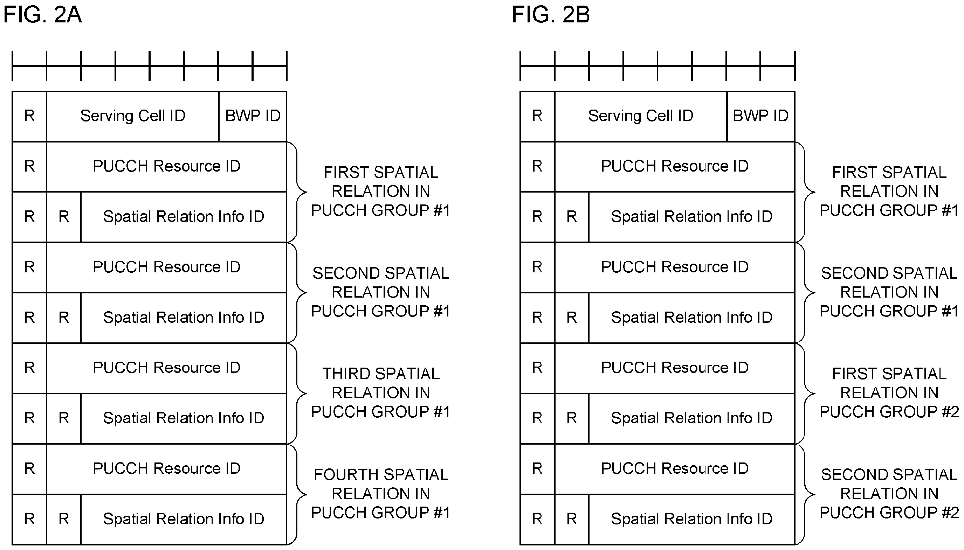

FIGS. 2A and 2B are each a diagram to show an example of an SRI sequence indicated by a MAC CE according to Embodiment 1.2. FIG. 2A shows an example of a case where four PUCCH resource ID fields are included in the MAC CE and indicate respective PUCCH resource IDs of a common PUCCH group (PUCCH group #1). In this case, the UE may associate corresponding pieces of SRI, in the order from the lowest (or highest) octet, with the numbers of the spatial relations in the SRI sequence for the PUCCH group in an order (in ascending order from the smallest number in FIG. 2A).

FIG. 2B shows an example of a case where four PUCCH resource ID fields are included in the MAC CE, and the upper two of the shown PUCCH resource ID fields indicate respective PUCCH resource IDs of PUCCH group #1 while the lower two indicate respective PUCCH resource IDs of PUCCH group #2. In this case, the UE may associate corresponding pieces of SRI, in the order from the lowest (or highest) octet for each PUCCH group, with the numbers of the spatial relations in the SRI sequence in an order (in ascending order from the smallest number in FIG. 2A).

Whether the MAC CE only relates to one PUCCH group as shown in FIG. 2A or relates to a plurality of PUCCH groups as shown in FIG. 2B may be explicitly indicated by using a field in the MAC CE. This field may be referred to, for example, as a "G" field and may mean a group field, a group switch field, or the like. The G field may be included in a case where the specific information described above is configured.

When the group filed indicates a specific value (for example, 0), this may mean that the PUCCH group corresponding to the subsequent PUCCH resource ID field (and the SRI field) is the same as the PUCCH group of the previous octet (or the PUCCH resource ID field one field before the subject field).

Otherwise (for example, when group field = 1), this may mean that the PUCCH group corresponding to the subsequent PUCCH resource ID field (and the SRI field) is different from (switched from) the PUCCH group of the previous octet (or the PUCCH resource ID field one field before the subject field). Switch may mean to derive, as a PUCCH group index, a value obtained by applying a certain operation to the index of the previous PUCCH group (for example, +1, -1, the remainder obtained by adding 1 to the index and then dividing the resultant by the maximum number of groups, or the like).

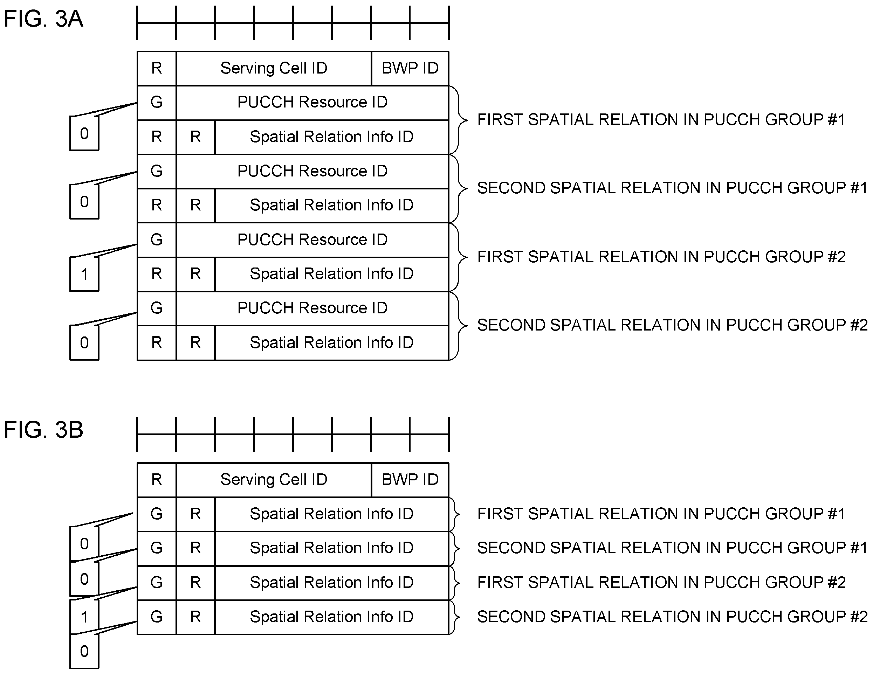

FIGS. 3A and 3B are each a diagram to show another example of the SRI sequence indicated by the MAC CE according to Embodiment 1.2. FIG. 3A is almost the same as FIG. 2B but is different in that the R field next to each PUCCH resource ID is replaced with the G field. In FIG. 3A, the third G field indicates '1,' which explicitly indicates that the subsequent fields indicate the SRI sequence of a different PUCCH group.

Note that the MAC CE need not necessarily include the PUCCH resource ID field as shown in FIG. 3B. This is because including the G field allows determination about the PUCCH group corresponding to each SRI field.

The first G field in the MAC CE may indicate how many PUCCH groups this MAC CE corresponds to. For example, when the first G field = 0, this may mean that the number of PUCCH groups indicated by this MAC CE = 1, and otherwise, it may mean that the number of PUCCH groups indicated by this MAC CE > 1.

Note that the G field may be constituted of two or more bits instead of being limited to one bit. The G field may be a field for explicitly indicating the subsequent (or just previous) PUCCH resource ID field or the PUCCH group index corresponding to the SRI field.

The examples in FIGS. 3A and 3B have the same number of pieces of SRI in the SRI sequence corresponding to each PUCCH group, i.e., 2, but it is apparent that this number may be different for each group. For example, the SRI sequence of PUCCH group #1 is constituted of two pieces of SRI, and the SRI sequence of PUCCH group #2 may be constituted of four pieces of SRI. By using the G field, it is possible to make preferable notification when the number of PUCCH spatial relations is desired to be different among groups.

Note that the number of PUCCH spatial relations corresponding to a certain PUCCH group (or the number of pieces of SRI included in the SRI sequence) may be defined in advance in a specification, may be configured by higher layer signaling, or may be determined based on UE capability.

According to the first embodiment described above, a plurality of pieces of SRI are preferably activated for each PUCCH resource / PUCCH group to perform PUCCH repetitive transmission.

<Second Embodiment>

In a second embodiment, a UE activates a plurality of pieces of PUCCH SRI by using a MAC CE having a configuration different from that of the PUCCH spatial relation activation/deactivation MAC CE of Rel-15/16 NR.

The second embodiment broadly divided into Embodiment 2.1, in which one or a plurality of SRI sequences are configured for a UE by RRC signaling, and Embodiment 2.2, in which a plurality of pieces of SRI are configured for a UE by RRC signaling as in Rel-15 NR.

### [Embodiment 2.1]

The UE may be configured with a certain number (for example, M) of SRI sequences by RRC signaling. Here, the certain number M may be, for example, 8, 64, or the like, or may be greater than 64.

Each SRI sequence may be associated with a certain ID (which may be referred to as an SRI sequence ID or the like) for identifying (specifying) the SRI sequence and configured.

For the UE, one SRI sequence among the configured M SRI sequences may be activated by a MAC CE. The MAC CE may indicate an SRI sequence ID for activation.

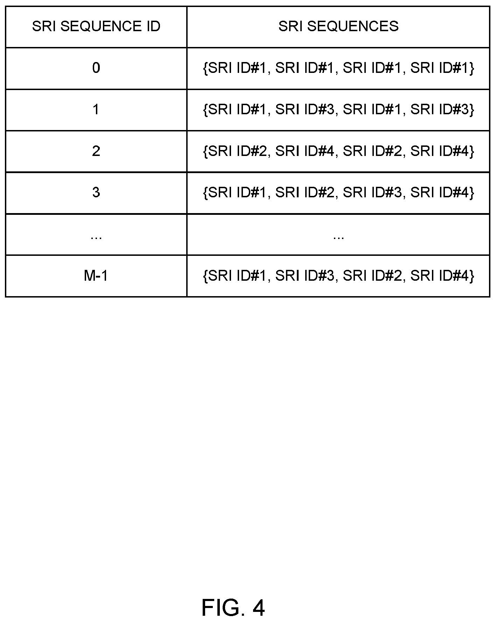

FIG. 4 is a diagram to show examples of an SRI sequence according to Embodiment 2.1. In this example, SRI sequence IDs and SRI sequences corresponding to the respective SRI sequence IDs are shown. In this example, an SRI sequence corresponding to PUCCH repetition having four times of repetition are shown, but this is not restrictive.

FIG. 4 shows M SRI sequences configured. As SRI sequences corresponding to SRI sequence ID = 0, the same SRI ID (here, SRI ID #1) may be used for the entire PUCCH repetition.

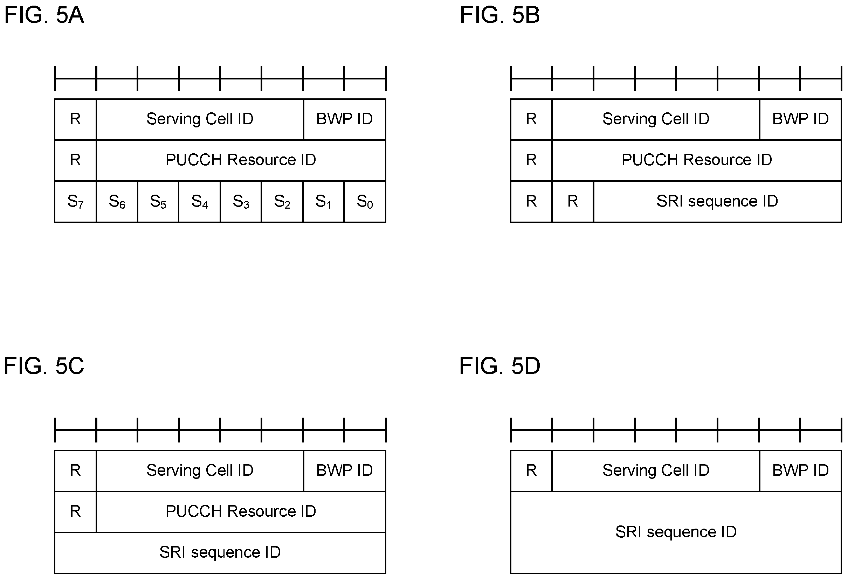

FIGS. 5A to 5D are each a diagram to show an example of an SRI activation/deactivation MAC CE according to Embodiment 2.1. When an indicated PUCCH resource ID is configured as part of a PUCCH group for a PUCCH resource ID field of each of the MAC CEs, the UE may assume that another PUCCH resource in the same PUCCH group is not indicated as the PUCCH resource ID by the same MAC CE. When an indicated PUCCH resource ID is configured as part of a PUCCH group in a PUCCH resource ID field of each of the MAC CEs, the UE may assume that this MAC CE is used for all the PUCCH resources in the PUCCH group.

The MAC CE in FIG. 5A has a configuration almost the same as an existing PUCCH SRI activation/deactivation MAC CE of Rel-15 NR but is different in meaning of the Sᵢ field.

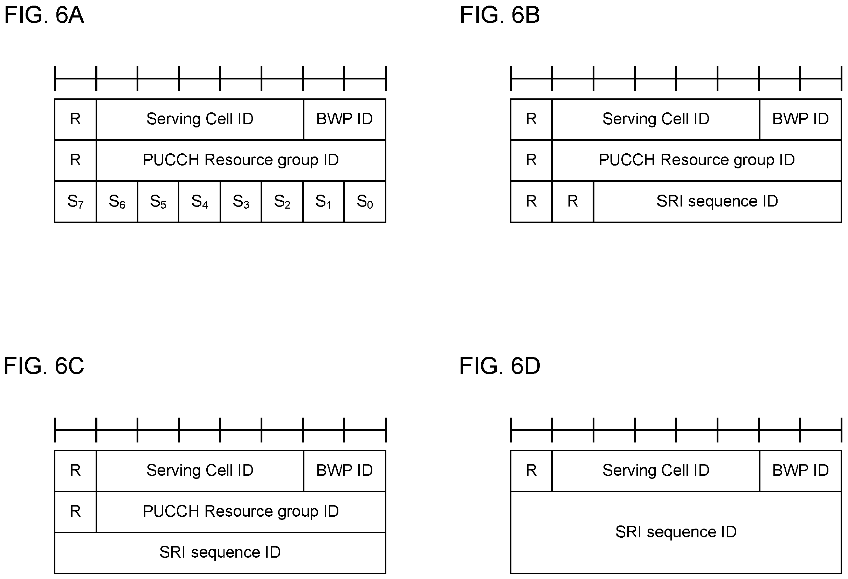

An existing Sᵢ field indicates that the PUCCH SRI having SRI ID #i+1 is to be activated/deactivated. However, the Sᵢ field in FIG. 6A indicates that the SRI sequence having SRI sequence ID #i (or #i+1) is to be activated/deactivated (for example, activated when Sᵢ = 1 while being deactivated when Sᵢ = 0).

Note that, although FIG. 5A is an example where M = 8, the number of Sᵢ fields may be increased/decreased when M is a different value.

The MAC CE in FIG. 5B has a configuration almost the same as the MAC CE in FIG. 5A but is different in including an SRI sequence ID field.

The SRI sequence ID field in FIG. 5B may indicate an SRI sequence ID to be used for the entire PUCCH repetition using the PUCCH resource corresponding to the PUCCH resource ID field of the MAC CE. When M is relatively large (for example, M = 64), the number of bits of the MAC CE shown in this example can be preferably decreased.

The MAC CE in FIG. 5C has a configuration almost the same as the MAC CE in FIG. 5B but is different in that the field size of the SRI sequence ID is increased from six bits to eight bits by slightly reducing the reserved bits.

The SRI sequence ID field in FIG. 5C can indicate an ID from 0 to 255. When M is quite relatively large (for example, M = 256), the number of bits of the MAC CE shown in this example can be preferably decreased.

The MAC CE in FIG. 5D has a configuration almost the same as the MAC CE in FIG. 5C but is different in that the field size of the SRI sequence ID is further increased to 16 bits with no PUCCH resource ID field being included.

The SRI sequence ID field in FIG. 5D can indicate an ID corresponding to M > 256. When M is quite large (for example, M > 256), the number of bits of the MAC CE shown in this example can be preferably decreased.

The UE may assume the configuration of the SRI activation/deactivation MAC CE, based on the number M of configured SRI sequence IDs, according to at least one of the following:
- when M is a value included in a first range (for example, M ≤ 8), the configuration corresponds to the configuration in FIG. 5A;
- when M is a value included in a second range (for example, 8 < M ≤ 64), the configuration corresponds to the configuration in FIG. 5B;
- when M is a value included in a third range (for example, 64 < M ≤ 256), the configuration corresponds to the configuration in FIG. 5C; and
- when M is a value included in a fourth range (for example, 256 < M), the configuration corresponds to the configuration in FIG. 5D.

Here, the first, second, third, and fourth ranges may each be configured by higher layer signaling or may each be configured in a specification.

Note that, when the UE receives a MAC CE as those shown in FIGS. 5B to 5D and the SRI sequence ID indicated by the MAC CE is already active, the UE may deactivate the SRI sequence ID. When the SRI sequence ID indicated by the MAC CE is not active and there is another SRI sequence ID that is already active, the UE may deactivate such another SRI sequence ID and activate the indicated SRI sequence ID.

The UE may assume that the MAC CE as those in FIGS. 5B to 5D includes information indicating activation or deactivation of an SRI sequence ID (for example, indicated by one or more R fields). The UE may control activation/deactivation of the indicated SRI sequence ID, based on the information.

Note that, when the PUCCH resource ID field is included in the MAC CE as in FIGS. 5A to 5C, the UE may assume that the SRI sequence is activated/deactivated on a PUCCH resource basis. When the PUCCH resource ID field is not included in the MAC CE as in FIG. 5D, the UE may assume that the SRI sequence is activated/deactivated commonly for a plurality of PUCCH resources (in other words, on a BWP basis, on a cell basis, on a PUCCH group basis, or the like). This similarly applies to other embodiments.

Note that the MAC CE in each of FIGS. 5B to 5D only includes one (PUCCH resource ID field corresponding to the) SRI sequence ID field, but a plurality of SRI sequence ID fields (or PUCCH resource ID fields) may be included. In this case, the (PUCCH resource ID fields corresponding to) SRI sequence ID fields may correspond to different PUCCH groups.

The number of SRI sequence ID fields included in the MAC CE may be configured by higher layer signaling or may be determined based on UE capability. For example, the UE may determine the number of SRI sequence ID fields included in the MAC CE, based on the number of PUCCH groups configured for the UE (or the number of PUCCH groups determined based on the number of different indices of the configured PUCCH groups).

### [Variation of Embodiment 2.1]

The MAC CE according to Embodiment 2.1 includes the PUCCH resource ID field but may include a PUCCH group ID field indicating a PUCCH group ID (index) instead.

FIGS. 6A to 6D are each a diagram to show an example of an SRI activation/deactivation MAC CE according to a variation of Embodiment 2.1. FIGS. 6A to 6C are different from FIGS. 5A to 5C in that the PUCCH resource ID field is replaced with the PUCCH group ID field. FIG. 6D is the same as FIG. 5D, but an indicated SRI sequence may be used for one or a plurality of PUCCH groups.

Descriptions related to the MAC CEs may correspond to contents obtained by interpreting a PUCCH resource in Embodiment 2.1 with a PUCCH group.

### [Embodiment 2.2]

In Embodiment 2.2, no SRI sequence is configured for the UE. However, the UE may be configured with a certain number of (for example, M) pieces of SRI by RRC signaling. Here, the certain number M may be, for example, 8, 64, or the like, or may be greater than 64.

For the UE, one or a plurality of pieces of SRI among the configured M pieces of SRI may be activated by a MAC CE.

In Embodiment 2.2.1, the UE is indicated with all the SRI IDs of respective PUCCH repetitions together, by one MAC CE. In Embodiment 2.2.2, the UE is indicated with the SRI ID of one specific transmission in PUCCH repetition by one MAC CE.

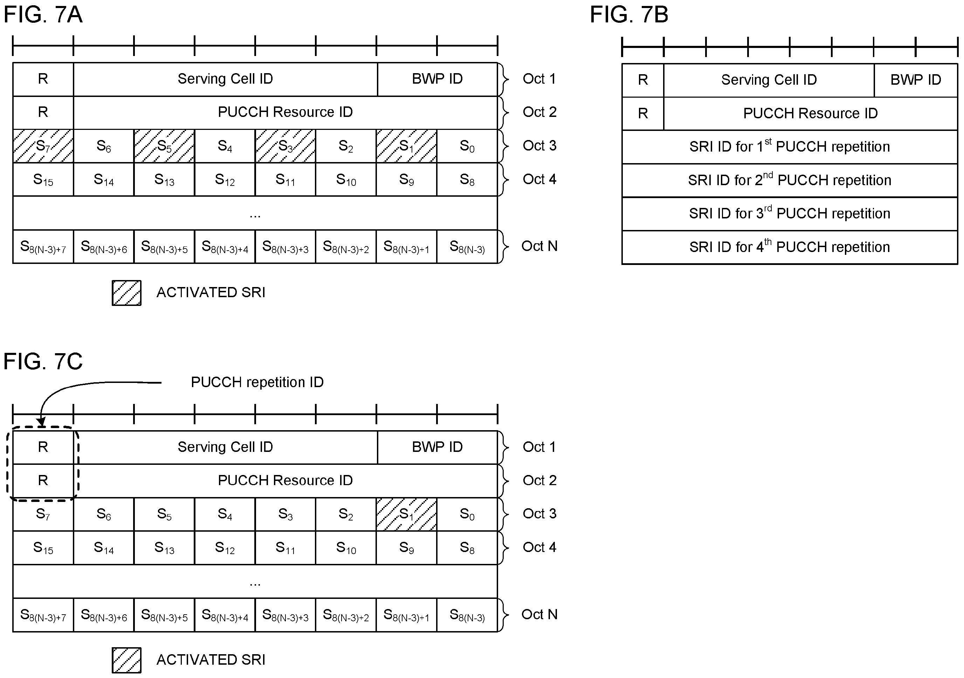

FIGS. 7A to 7C are each a diagram to show an example of an SRI activation/deactivation MAC CE according to Embodiment 2.2. When an indicated PUCCH resource ID is configured as part of a PUCCH group for a PUCCH resource ID field of each of the MAC CEs, the UE may assume that another PUCCH resource in the same PUCCH group is not indicated as the PUCCH resource ID by the same MAC CE. When an indicated PUCCH resource ID is configured as part of a PUCCH group in a PUCCH resource ID field of each of the MAC CEs, the UE may assume that this MAC CE is used for all the PUCCH resources in the PUCCH group.

FIG. 7A shows an example of a MAC CE according to Embodiment 2.2.1. In FIG. 7A, the MAC CE may be constituted of N octets, which is different from the MAC CE of Rel. 15 in FIG. 1A constituted of three octets. In this case, 8(N - 2) Sᵢ fields corresponding to the values from i = 0 to 8(N - 3) + 7 may be included. Note that the MAC CE may be constituted to satisfy 8 (N - 3) + 7 = M - 1, for example.

The MAC CE in FIG. 7A may have the values of a plurality of Sᵢ values being 1, different from the existing MAC CE in FIG. 1A. In this example, four values of S₁, S₃, S₅, and S₇ are 1. Each of a plurality of pieces of SRI corresponding to the respective Sᵢ values being 1 may be used for any of repetitive transmissions. The UE may determine for each SRI ID field to which transmission in repetitive transmissions the SRI ID field is to be used, in accordance with a certain rule.

For example, the UE may assume that an activated SRI ID corresponds to each repetitive transmission in ascending order or descending order. Specifically, the UE may assume that activated SRI IDs and repetitive transmissions separately arranged in ascending order or descending order have a one-to-one correspondence from the smallest ones. In the case of FIG. 7A, the UE may use an SRI ID #1 field for the first transmission in repetitive transmission (1st PUCCH repetition), use an ID #3 field for the second transmission in repetitive transmission, use an ID #5 field for the third transmission in repetitive transmission, and use an ID #7 field for the fourth transmission in repetitive transmission.

The MAC CE in FIG. 7B, different from the MAC CE in FIG, 7A, includes fields each directly indicating the value of an SRI ID to be activated. In this example, four SRI ID fields each constituted of eight bits and used for the first, second, third, and fourth transmissions in repetitive transmission are shown. Note that, although FIG. 7B is an example where the number of repetitive transmissions = 4, the number of SRI ID fields may be increased/decreased when the number of repetitive transmissions is a different value. The UE may identify the size of the MAC CE, based on the number of configured or indicated PUCCH repetitive transmissions, UE capability, and the like.

Note that the size of the SRI ID field is not limited to eight bits and may be six bits, 16 bits, or the like, or may be a variable number of bits corresponding to the number of configured pieces of SRI. The SRI ID #i field may indicate a simple i-th spatial relation not related to #i-th transmission in repetitive transmission.

FIG. 7C shows an example of a MAC CE according to Embodiment 2.2.2. For the MAC CE, the UE may assume that only one Sᵢ value can be indicated to be 1 similarly to the existing MAC CE in FIG. 1A. Meanwhile, the MAC CE in FIG. 7C may include a field for identifying a target to which the SRI ID is to be used (for example, which one of transmissions of PUCCH repetition). This field may be referred to as a PUCCH repetition ID field. Although FIG. 7C shows an example in which two R fields in Octs 1 and 2 are used as PUCCH repetition ID fields, the configuration of fields is not limited thereto.

The UE may assume that the SRI in the SRI ID #i field indicated to have Sᵢ = 1 is used for x-th transmission in repetitive transmission corresponding to the value of the PUCCH repetition ID field.

One or a plurality of MAC CEs in FIG. 7C may be included in one MAC PDU, for example. By using the MAC CE in FIG. 7C, SRI can be adjusted individually on a repetition basis.

Each of the MAC CEs in FIGS. 7A to 7C only includes information of spatial relations of the PUCCH resources for a certain PUCCH group, but this may be enhanced. For example, a MAC CE may include a plurality of field groups each including the fields subsequent to the PUCCH resource ID, and the UE may assume that the plurality of field groups correspond to (the PUCCH resources of) different PUCCH groups.

The number of field groups included in the MAC CE may be configured by higher layer signaling or may be determined based on UE capability. For example, the UE may determine the number of field groups included in the MAC CE, based on the number of PUCCH groups configured for the UE (or the number of PUCCH groups determined based on the number of different indices of the configured PUCCH groups).

### [Variation of Embodiment 2.2]

The MAC CE according to Embodiment 2.2 includes the PUCCH resource ID field but may include a PUCCH group ID field indicating a PUCCH group index (ID) instead.

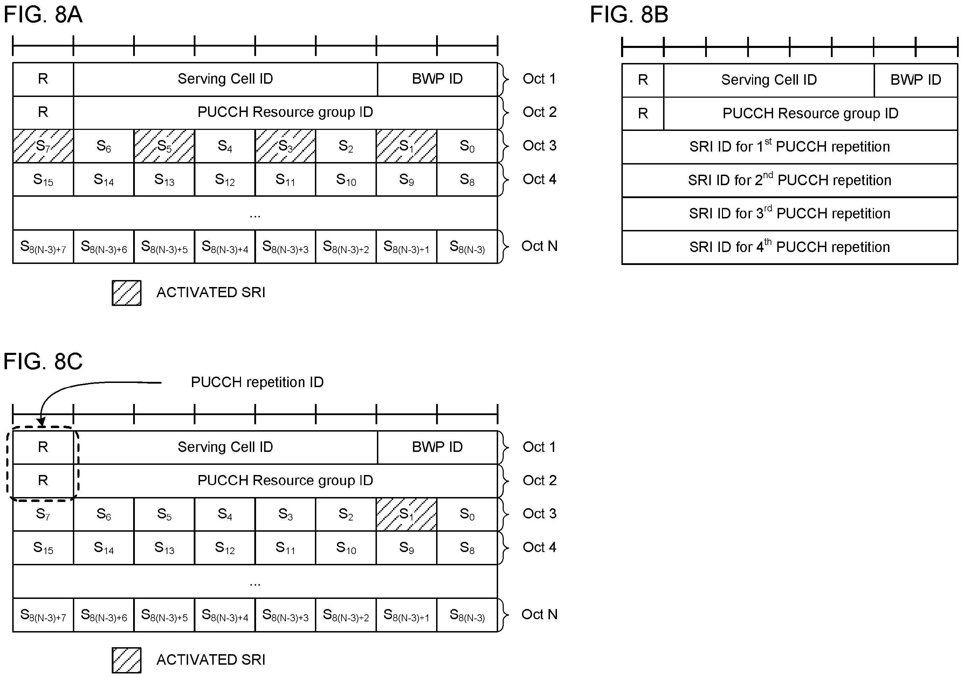

FIGS. 8A to 8C are each a diagram to show an example of an SRI activation/deactivation MAC CE according to a variation of Embodiment 2.2. FIGS. 8A to 8C are different from FIGS. 7A to 7C in that the PUCCH resource ID field is replaced with the PUCCH group ID field.

Descriptions related to the MAC CEs may correspond to contents obtained by interpreting a PUCCH resource in Embodiment 2.2 with a PUCCH group.

### [Variation Part 2 of Embodiment 2.2]

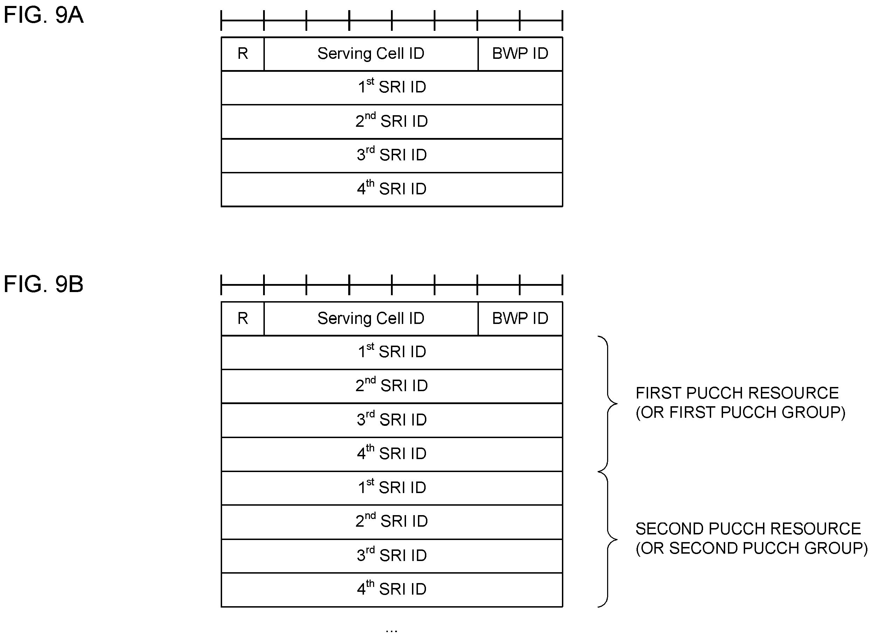

FIGS. 9A and 9B are each a diagram to show an example of an SRI activation/deactivation MAC CE according to a variation part 2 of Embodiment 2.2.

FIG. 9A is different from FIG. 7B in that the PUCCH resource ID field is deleted. Each SRI field is only changed in field name and may mean the same. In the present disclosure, the i-th spatial relation (SRI) may correspond to the i-th PUCCH repetition (i-th PUCCH transmission occasion).

According to the MAC CE as that shown in FIG. 9A, a plurality of pieces of SRI can be indicated on a PUCCH resource basis (or on a PUCCH group basis).

The number of SRI ID fields included in the MAC CE may be configured by higher layer signaling or may be determined based on UE capability. For example, the UE may determine the number of SRI ID fields included in the MAC CE, based on the number of PUCCH repetitions configured for the UE.

FIG. 9B is different from FIG. 9A in that a plurality of SRI field groups (sets of four fields in FIG. 9B) are included.

The number of field groups included in the MAC CE may be configured by higher layer signaling or may be determined based on UE capability. For example, the UE may determine the number of field groups included in the MAC CE, based on the number of PUCCH groups configured for the UE (or the number of PUCCH groups determined based on the number of different indices of the configured PUCCH groups).

The UE may determine that the field groups are associated, from the one corresponding to the lowest (or highest) octet, with PUCCH resource (or PUCCH group) IDs in ascending order. In FIG. 9B, the first field group relates to the first PUCCH resource (group), and the second field group relates to the second PUCCH resource (group).

The number of pieces of SRI corresponding to each PUCCH group may be defined in advance in a specification, may be configured by higher layer signaling, or may be determined based on UE capability, as described in Embodiment 1.2.

Note that a group field indicating whether the PUCCH group of a subsequent SRI field is the same as or different from the PUCCH group of the SRI field one field before the subject field, as that described in Embodiment 1.2, may be included in the MAC CE. Determination about SRI related to the group field may be similar to that in Embodiment 1.2.

The PUCCH resource ID field (or the PUCCH group ID field) may be omitted for other MAC CEs in the second embodiment, as described here in this variation part 2.

### [Variation Part 3 of Embodiment 2.2]

The inventors of the present invention focused on pieces of SRI possible to be activated for each PUCCH resource group being restricted to the maximum number (eight in Rel. 15) of pieces of SRI possible to be active simultaneously among all the pieces of SRI. For example, even when the number of pieces of SRI possible to be configured by RRC is N (for example, 64), the number of pieces of SRI possible to be indicated for a plurality of PUCCH groups by using a MAC CE is restricted by the above-described maximum number. The inventors of the present invention came up with the idea of reducing the bits of a MAC CE in consideration of these.

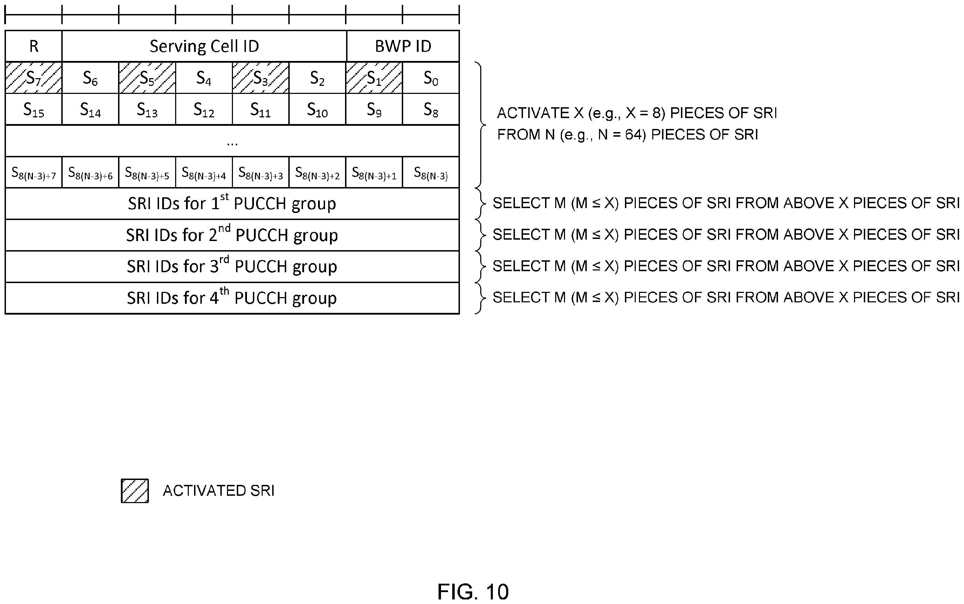

FIG. 10 is a diagram to show an example of an SRI activation/deactivation MAC CE according to a variation part 3 of Embodiment 2.2.

An upper part of the MAC CE is similar to that in FIG. 7A. Based on the Sᵢ fields, the UE activates X pieces among N configured pieces of SRI. The value X may be defined in advance in a specification, may be configured by higher layer signaling, or may be determined based on UE capability. Note that, although the PUCCH resource ID field is deleted in FIG. 10, the PUCCH resource ID field may be included.

A lower part of the MAC CE includes fields each being for an SRI ID group for the i-th (i = 1 to 4) PUCCH group. Each field indicates information for selecting M (M ≤ X) pieces from the X pieces of SRI. The value M may be defined in advance in a specification, may be configured by higher layer signaling, or may be determined based on UE capability. The value M may be independent of (different from) each other for each PUCCH group or for each PUCCH resource.

Although each of the SRI ID group fields is shown to have eight bits in FIG. 10, but this is not restrictive. In this example, it is assumed that eight pieces of SRI in total, i.e., S₁, S₃, S₅, and S₇, and four others are activated (X = 8). The SRI ID group fields may be any as long as each being able to express a combination of M out of eight (₈C_{M}), and hence five bits are needed to express 28 combinations when M = 2 while seven bits are needed to express 70 combinations when M = 4, for example. Note that M permutations instead of combinations may be indicated, and in this case, any order of spatial relations can be arbitrarily indicated.

A bit configuration (a configuration including fields for SRI activation and fields indicating combinations of the activated pieces of SRI) as that described in this variation part 3 may also be used for the other MAC CEs according to the second embodiment.

According to the second embodiment described above, a plurality of pieces of SRI are preferably activated for each PUCCH resource / PUCCH group to perform PUCCH repetitive transmission.

### <Third Embodiment>

A third embodiment relates to spatial relations used for PUCCH repetition.

A description will be given of mapping of pieces of SRI to transmission occasions in actual PUCCH repetition in a case where a plurality of pieces of SRI (SRI sequence) are indicated for each PUCCH resource or PUCCH group by a MAC CE as in the first and the second embodiments.

In a case of activating a plurality of pieces of SRI in a bitmap as in FIG. 7A, the i-th piece of SRI is assumed to be associated in ascending order or descending order in this bitmap, and it is hence difficult to flexibly associate the pieces of SRI with repetitive transmissions.

Using the i-th piece of SRI among a plurality of pieces of SRI for the j-th repetition may be configured for a UE by higher layer signaling (a correspondence between the i-th piece of SRI and the j-th repetition may be configured). A correspondence between the i-th piece of SRI and the j-th repetition for a certain PUCCH resource or PUCCH group may be changed by at least one of RRC signaling, a MAC CE, and DCI.

A plurality of pieces of SRI may cycle. For example, when {SRI#1, #2, #3, #4} are active and a PUCCH having the number of repetitions of four is transmitted, the UE may use spatial relations for the {first, second, third, fourth} repetitions according to mapping indicated in at least one of the following cycle:
- cycle 1: {SRI #1, #2, #3, #4};
- cycle 2: {SRI #2, #3, #4, #1};
- cycle 3: {SRI #3, #4, #1, #2}; and
- cycle 4: {SRI #4, #1, #2, #3}.

The UE may be configured about which of the above cycles to use, by higher layer signaling (RRC/MAC CE), determine which of the above cycles to use, based on a specific field in DCI and a specific parameter (information) related to the DCI, or determine which of the above cycles to use, based on the timing of the first transmission of the PUCCH (for example, a number (for example, an index) related to a slot/symbol/subslot/frame/subframe). When a cycle is determined based on the first transmission timing, it is expected that the order of the pieces of SRI to be used for PUCCH repetition be preferably randomized.

Here, the specific field may be a PUCCH resource indicator (PRI) field, an SRI field, a transmission configuration indication (TCI) field, another field, or the like, or may be expressed by a combination of a plurality of fields.

The specific parameter may include at least one of a time resource, a frequency resource, or a control channel element (CCE) index of (detected) DCI (or corresponding to or used for reception of the DCI), a physical resource block (PRB) index, a resource element (RE) index, a search space index, a control resource set (CORESET) index, a CORESET pool index, and an aggregation level. In other words, the specific parameter corresponds to implicit notification using DCI.

According to the third embodiment described above, it is possible to appropriately determine spatial relations to use for PUCCH repetition.

### <Others>

At least one of the above-described embodiments may be used only for a UE reporting a specific UE capability or supporting the specific UE capability.

The specific UE capability may indicate at least one of the following:
- whether to support a plurality of spatial relations for each PUCCH resource or PUCCH group (the number of (or the maximum number of) supported spatial relations may be included;
- whether to support different spatial relations for respective PUCCH transmission occasions;
- the maximum number of active spatial relations for PUCCH repetition;
- the maximum number of active spatial relations for PUCCH repetition for transmitting the same UCI;
- the maximum number of PUCCH resource groups;
- the maximum number of beam switches for one transition (or one transmission) of a PUCCH transmitting the same UCI
- the maximum number of configured spatial relations for PUCCH repetition; and
- the maximum number of PUCCH slots/subslots/frames/subframes for PUCCH repetition.

At least one of the above-described embodiments may be used when a UE is configured with specific information related to the above-described embodiments by higher layer signaling. For example, the specific information described above may be information indicating that different spatial relations for PUCCH transmission occasions are to be activated, any RRC parameter for a specific release (for example, Rel. 17), or the like.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

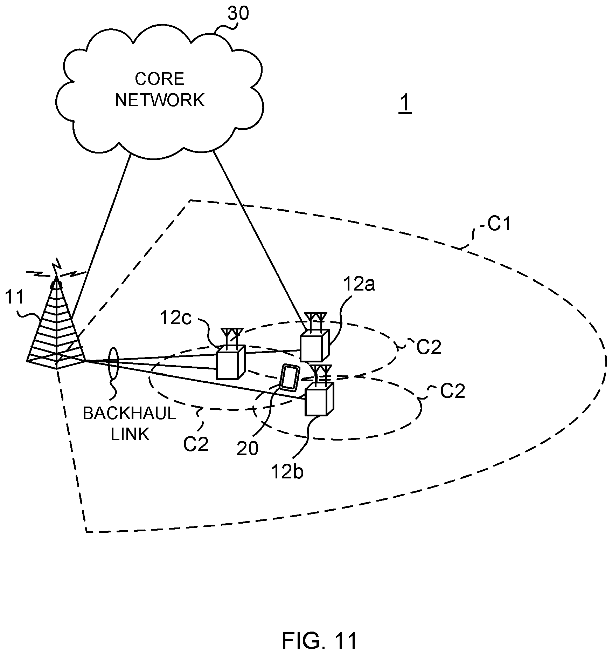

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

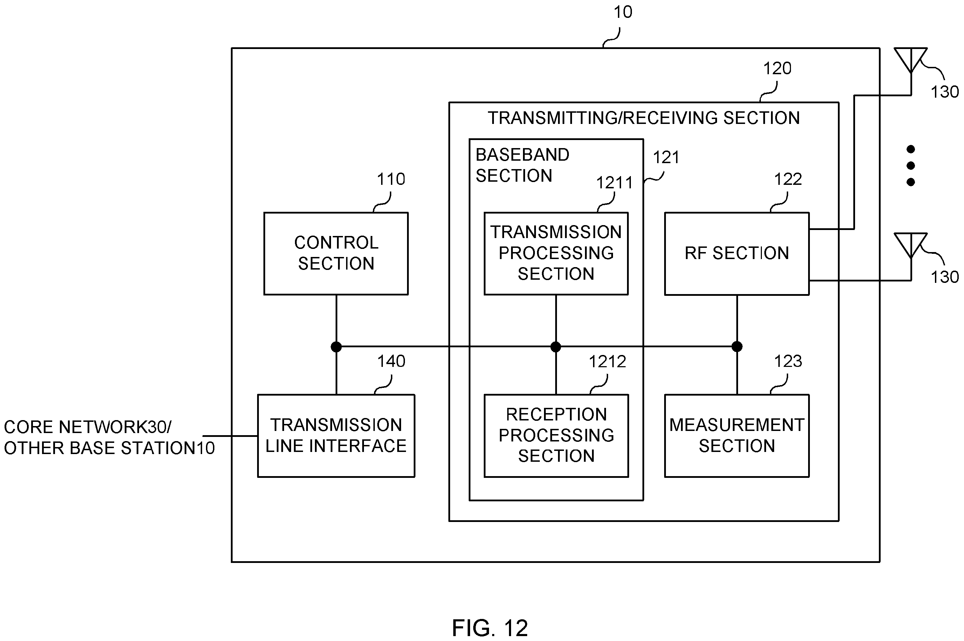

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit, to the user terminal 20, a Medium Access Control (MAC) control element (MAC CE) related to a Physical Uplink Control Channel (PUCCH) resource or a PUCCH group.

The control section 110 may assume that the user terminal 20 determines a plurality of spatial relations for the PUCCH resource or the PUCCH group, based on the MAC CE.

### (User Terminal)

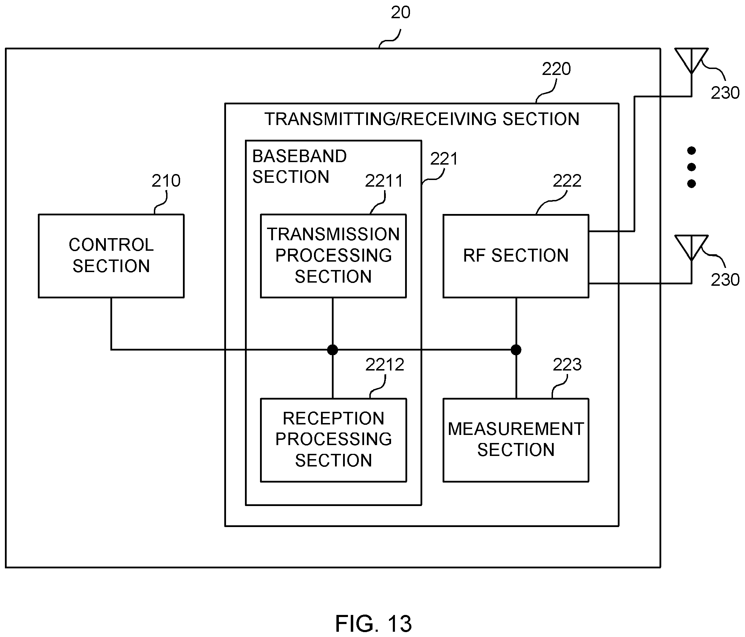

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a Medium Access Control (MAC) control element (MAC CE) related to a Physical Uplink Control Channel (PUCCH) resource or a PUCCH group.

The control section 210 may determine a plurality of spatial relations (for example, SRI sequence) for the PUCCH resource or the PUCCH group, based on the MAC CE.

When the MAC CE includes a plurality of spatial relation information ID fields corresponding to the same PUCCH group (or the same PUCCH resource), the control section 210 may determine that the spatial relation information ID fields indicate a plurality of spatial relations for the same PUCCH group (or the PUCCH group to which the same PUCCH resources belong).

The MAC CE may include information (for example, a group field) indicating that spatial relations for a plurality of PUCCH groups are included.

The MAC CE may include a field for activating a plurality of spatial relation information IDs and a field indicating a combination of any of the spatial relation information IDs activated.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

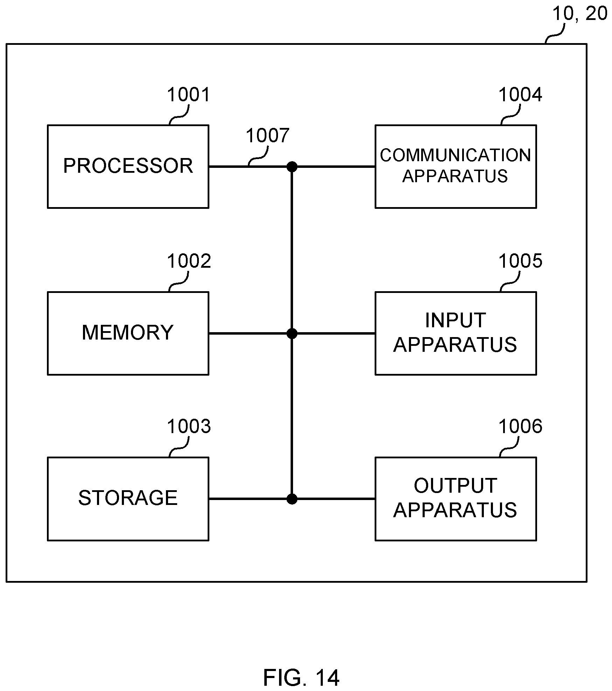

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs .

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain channel/signal outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be indicated by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a Medium Access Control (MAC) control element (MAC CE) related to a Physical Uplink Control Channel (PUCCH) resource or a PUCCH group; and
a control section that determines a plurality of spatial relations for the PUCCH resource or the PUCCH group, based on the MAC CE.

2. The terminal according to claim 1, wherein
when the MAC CE includes a plurality of spatial relation information ID fields corresponding to a same PUCCH group, the control section determines that the spatial relation information ID fields indicate a plurality of spatial relations for the same PUCCH group.

3. The terminal according to claim 1 or 2, wherein
the MAC CE includes information indicating that spatial relations for a plurality of PUCCH groups are included.

4. The terminal according to claim 1, wherein
the MAC CE includes a field for activating a plurality of spatial relation information IDs and a field indicating a combination of any of the spatial relation information IDs activated.

5. A radio communication method of a terminal, the radio communication method comprising:
receiving a Medium Access Control (MAC) control element (MAC CE) related to a Physical Uplink Control Channel (PUCCH) resource or a PUCCH group; and
determining a plurality of spatial relations for the PUCCH resource or the PUCCH group, based on the MAC CE.

6. A base station comprising:
a transmitting section that transmits, to a terminal, a Medium Access Control (MAC) control element (MAC CE) related to a Physical Uplink Control Channel (PUCCH) resource or a PUCCH group; and
a control section that assumes that the terminal determines a plurality of spatial relations for the PUCCH resource or the PUCCH group, based on the MAC CE.
